# EUROPÄISCHE PATENTSCHRIFT

(11) **EP 0 713 799 B1**
(45) Veröffentlichungstag und Bekanntmachung des Hinweises auf die Patenterteilung: **10.03.1999**
(21) Anmeldenummer: 95890186.0
(22) Anmeldetag: 18.10.1995
(51) Int. Cl.: B60M 1/28

(54) **Maschine zur Unterhaltung einer Fahrleitung eines Gleises**
Machine for maintenance of a railway overhead line
Machine pour maintenir une ligne caténaire de chemin de fer

(30) Priorität: 23.11.1994 AT 2174/94
(43) Veröffentlichungstag der Anmeldung: 29.05.1996
(73) Patentinhaber: Franz Plasser Bahnbaumaschinen- Industriegesellschaft m.b.H., 1010 Wien (AT)
(72) Erfinder: Theurer, Josef, A-1010 Wien (AT); Gruber, Leopold Rudolf, A-3270 Scheibbs (AT)

(56) Entgegenhaltungen:
- DE-A- 3 537 833
- GB-A- 1 379 791

## Beschreibung

Die Erfindung betrifft eine Maschine zur Unterhaltung einer Fahrleitung eines Gleises mit einem auf Schienenfahrwerken abgestützten, durch einen Fahrantrieb verfahrbaren Maschinenrahmen.

Fahrleitungen sind in der Regel als Kettenwerksysteme ausgeführt, bei denen der Fahrdraht an einem Tragseil hängt und damit in einer vorgegebenen Höhenlage gehalten wird. Temperaturschwankungen verursachen Längenänderungen des Fahrdrahtes und Tragseiles, was bei fester Abspannung zu unakzeptablen Zugkraft- und Durchhangsschwankungen führen würde. Daher werden Fahrdraht und Tragseil selbsttätig mit Hilfe von Gewichten in sogenannten Radspannwerken nachgespannt, die an den Enden von Kettenwerksabschnitten angeordnet sind. Die Übergänge bzw. Sektionstrennungen zwischen den Kettenwerken an den Nachspannungspunkten sind für den Stromabnehmerlauf besonders kritisch, weshalb ihrer Erhaltung erhöhte Bedeutung zukommt.

Eine Maschine zur Unterhaltung einer Fahrleitung ist z.B. aus der DE 42 06 632 A1 bekannt. Diese - auch als Motorturmwagen bezeichnete - selbstverfahrbare Maschine weist einen Wagenaufbau mit Arbeitskabine sowie eine höhenverstellbare Arbeitsbühne auf. Darauf ist eine Vorrichtung zum Erfassen bzw. Verschieben eines gespannten Fahrdrahtes einer Fahrleitung angeordnet, die zur Korrektur der Fahrdraht-Seitenlage in bezug auf die Gleismitte dient. An einem Ende des Motorturmwagens ist außerdem ein Kranausleger befestigt, der für weitere Gleiserhaltungsarbeiten einsetzbar ist.

In der GB 1 379 791 B wird eine Maschine zum Installieren einer Fahrleitung beschrieben, bei der auf einer Hebebühne Einrichtungen zum Positionieren und Hängen des - auf Vorratstrommeln gelagerten - Fahrdrahtes und Tragseiles sowie eine Vorrichtung zum Regeln der Drahtspannung vorgesehen sind. Diese besteht im Prinzip aus einer Reihe einander paarweise gegenüberliegender Gummirollen, zwischen denen der Fahrdraht oder das Tragseil verläuft und die anhand von Hydraulikzylindern gegeneinander bzw. gegen den Draht gepreßt werden. Die Rollen sind über Zahnräder untereinander sowie mit einer elektromagnetischen Bremse verbunden, wobei auch die Vorratstrommeln mit Bremsen ausgestattet sind und die Spannkraft durch die Vorfahrt der Maschine erzeugt wird.

Eine weitere Maschine zur Fahrleitungsinstallation ist in der WO 92/15470 geoffenbart. Bei dieser sind auf dem Maschinenrahmen hintereinander zwei höhenverstell- und drehbare Hubarme montiert, die an ihrem freien Ende je eine Vorrichtung zum Festhalten des von einer Trommel abgespulten Drahtes und zum Verlegen desselben in seiner Endlage aufweisen. Die Festhaltevorrichtung ist aus Rollenpaaren gebildet, die in einem Rahmen gelagert sind und gemeinsam über einen Motor angetrieben werden. Der Abstand zwischen zugeordneten Rollen ist variabel einstellbar, um verschiedenen Drahtstärken angepaßt zu werden.

Schließlich ist noch aus der EP 0 395 781 B1 eine Klemme zum Spannen und Ziehen eines Fahrdrahtes bei Montagearbeiten bekannt. Die Klemme besteht aus zwei auf einem Rahmen drehbar befestigten Exzenterbacken, die symmetrisch zu einer für den Draht vorgesehenen Längsnut angeordnet sind und mittels Biegefedern aneinander gedrückt werden, um den Draht festzuklemmen. Die Exzenterbacken sind außerdem mittels ineinandergreifender Zahnräder derart miteinander gekoppelt, daß bei Aufbringung einer Zugkraft auf den Rahmen der Klemme - aufgrund der exzentrischen Form der Backen - die auf den Draht wirkende Klemmkraft noch verstärkt wird.

Die Aufgabe der vorliegenden Erfindung liegt nun in der Schaffung einer Maschine gemäß der DE-A-4 206 632 mit erweiterten Einsatzmöglichkeiten im Rahmen der Fahrleitungsunterhaltung.

Diese Aufgabe wird mit einer Maschine der gattungsgemäßen Art dadurch gelöst, daß eine verstellbare Klemmbacken zum Festklemmen eines Fahrdrahtes oder Tragseiles der Fahrleitung aufweisende Klemmvorrichtung mit einer durch Antriebe höhen- und seitenverstellbaren, am Maschinenrahmen befestigten Verstelleinrichtung verbunden ist, und daß ein Spannantrieb zur Veränderung der Distanz zwischen Klemmbacken und Verstelleinrichtung vorgesehen ist.

Mit einer derartig ausgebildeten Maschine besteht die Möglichkeit, rasch und einfach die für die Aufrechterhaltung der vorgeschriebenen Fahrleitungsspannung erforderliche Zug- oder Spannkraft an jeder beliebigen Stelle von der Klemmvorrichtung auf die Fahrleitung zu übertragen. Dabei ist von besonderem Vorteil, daß mit Hilfe der Spannantriebe der elastische Deformationsbereich der Verstelleinrichtung - der aus der hohen Spannkrafteinwirkung in Verbindung mit einer seitlichen Auslenkung der Klemmvorrichtung in bezug auf die Maschinenmitte resultiert - kompensierbar ist. Damit ist sichergestellt, daß bei Entlastung der normalerweise die Spannkraft aufbringenden Radspannwerke ein Abfall der Fahrleitungsspannung zuverlässig ausgeschlossen ist.

Die Weiterbildung gemäß den Ansprüchen 2, 3 und 4 gewährleistet, daß die Klemmvorrichtung immer genau und vor allem problemlos an die jeweilige Lage des Fahrdrahtes und Tragseiles anpaßbar ist, ungeachtet der Höhenlage oder des Zick-Zack-Verlaufes der Fahrleitung bzw. der Position der Maschine relativ zu dieser.

Die bevorzugte Ausbildung nach den Ansprüchen 5 und 6 bietet die Möglichkeit, die durch den Spannantrieb übertragenen Spannkräfte gleichzeitig zur Aufbringung der den jeweiligen Draht haltenden Klemmkräfte zu verwenden, ohne dazu einen eigenen Antrieb zu benötigen. Bei entsprechender Anordnung des Hebelsystems ist der vorteilhafte Effekt erzielbar, daß die Klemmkraft proportional zur Größe der Spannkraft anwächst, um so ein Abrutschen der Klemmvorrichtung bei Aufbringen besonders hoher Zugkräfte zuverlässig auszuschließen. Diese Wirkung wird durch das in Anspruch 7 beschriebene Merkmal noch wesentlich verbessert, wobei durch die Kunststoffeinlage außerdem eine Beschädigung bzw. ein Deformieren des Fahrdrahtes oder Tragseiles vermieden werden kann.

Mit der Variante gemäß den Ansprüchen 8 und 9 läßt sich die Klemmvorrichtung sehr einfach auf den unterschiedlichen vertikalen Abstand zwischen Fahrdraht und Tragseil einstellen, wobei es ebenso leicht möglich ist, auch gegebenenfalls unterschiedliche Zugspannungen auf den Fahrdraht und das Tragseil anhand der unabhängig voneinander beaufschlagbaren Klemmbackenpaare aufzubringen.

Schließlich stellt die Weiterbildung nach Anspruch 10 sicher, daß das auf der Arbeitsbühne befindliche Bedienungspersonal in seiner Bewegungsfreiheit während des Arbeitseinsatzes nicht durch die Klemmvorrichtung bzw. den diese tragenden Kranausleger eingeschränkt oder beeinträchtigt werden kann.

Die Erfindung wird nun anhand einiger, in den Zeichnungen dargestellter Ausführungsbeispiele näher beschrieben.

Es zeigen:
Fig. 1 eine Seitenansicht einer Maschine zur Unterhaltung einer Fahrleitung mit einer erfindungsgemäßen Klemmvorrichtung,
Fig. 2 und 3 eine vergrößerte Seitenansicht bzw. Draufsicht der Klemmvorrichtung,
Fig. 4 eine vergrößerte Schnittansicht gemäß Pfeil IV in Fig. 2,
Fig. 5 eine partielle Draufsicht auf eine Variante der erfindungsgemäßen Klemmvorrichtung und
Fig. 6 und 7 eine Stirn- und Seitenansicht einer weiteren Ausbildungsform einer erfindungsgemäßen Klemmvorrichtung.

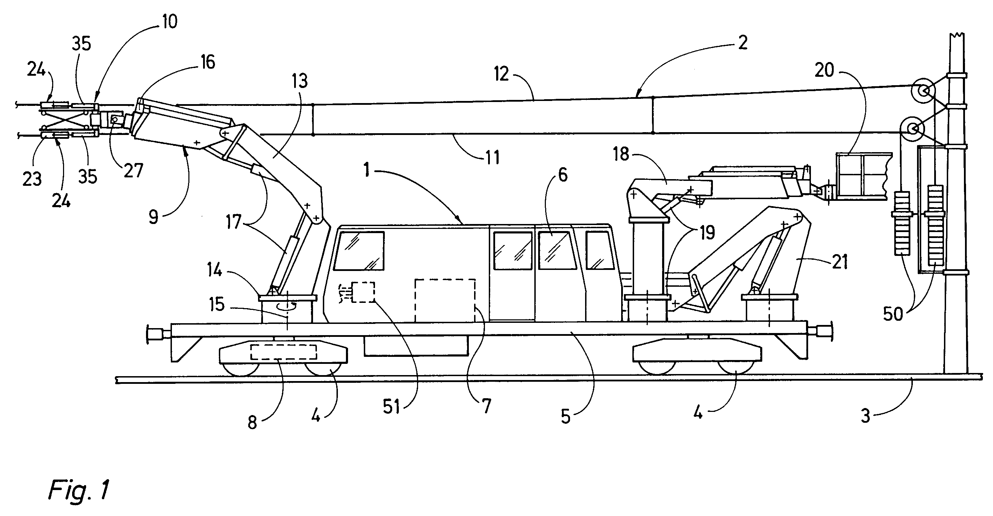

Eine in Fig. 1 ersichtliche Maschine 1 zur Unterhaltung einer Fahrleitung 2 eines Gleises 3 weist einen auf Schienenfahrwerken 4 gelagerten Maschinenrahmen 5 auf, an dem eine Fahr- bzw. Arbeitskabine 6 mit einer Energieversorgungseinrichtung 7 angeordnet ist. Diese dient zur Beaufschlagung eines Fahrantriebes 8 sowie aller weiteren, noch zu beschreibenden Antriebe der Maschine 1.

Am in der Zeichnung linken Stirnende des Maschinenrahmens 5 befindet sich eine Verstelleinrichtung 9 für eine Klemmvorrichtung 10 zum Festklemmen eines Fahrdrahtes 11 und/oder eines Tragseiles 12 der Fahrleitung 2. Die Verstelleinrichtung 9 ist als mit dem Maschinenrahmen 5 verbundener Kranausleger 13 ausgebildet, der anhand eines Drehantriebes 14 um eine vertikale Achse 15 seitlich verdrehbar ist. Die Klemmvorrichtung 10 ist am freien, teleskopisch verlängerbare Kranarme 16 aufweisenden Ende des Kranauslegers 13 befestigt, der anhand von Antrieben 17 höhenverstellbar ist. Ein zweiter, über Antriebe 19 höhen- und seitenverstellbar ausgebildeter Kranausleger 18 ist am gegenüberliegenden Ende des Maschinenrahmens 5 angeordnet und mit einer Arbeitsbühne 20 ausgestattet. Ein zusätzlicher Kranausleger 21 ist in seiner eingeklappten Ruhestellung zu sehen.

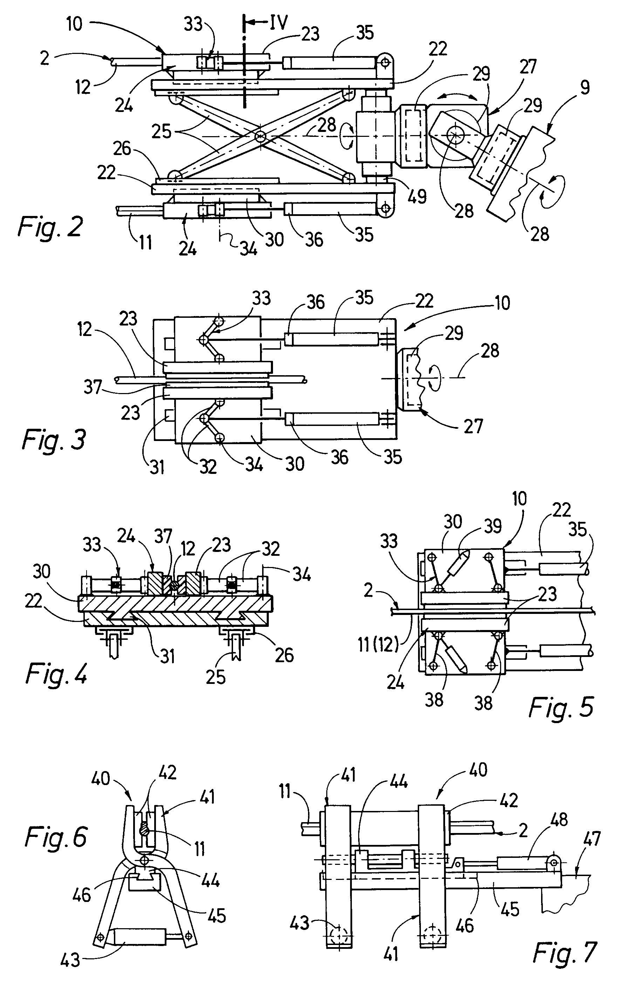

Wie aus den Fig. 2 bis 4 deutlich wird, ist die Klemmvorrichtung 10 aus zwei in vertikaler Richtung übereinander angeordneten und verstellbare Klemmbacken 23 aufweisenden Klemmbackenpaaren 24 gebildet, die jeweils auf einer Tragplatte 22 gelagert sind. Die beiden parallel zueinander verlaufenden Tragplatten 22 sind anhand eines Verstellantriebes 49 unterschiedlich zueinander distanzierbar, wobei deren parallele Lage durch an beiden Platten angelenkte bzw. diese miteinander verbindende Scherenhebel 25 gewahrt bleibt. Ein Ende jedes Scherenhebels 25 ist dabei in einer Gleitschiene 26 längsverschiebbar an der jeweiligen Tragplatte 22 geführt. Die Klemmvorrichtung 10 ist durch ein allseitig wirksames Gelenk 27 mit der Verstelleinrichtung 9 bzw. dem Kranausleger 13 verbunden. Jeder Drehachse 28 des Gelenkes 27 ist ein eigener Drehantrieb 29 zugeordnet.

Die parallel zueinander verlaufenden Klemmbacken 23 jedes Klemmbackenpaares 24 sind zueinander verstellbar auf einem plattenförmigen Schlitten 30 montiert, der auf der jeweiligen Tragplatte 22 anhand einer nut- und federartig ausgebildeten Führung 31 in Längsrichtung der Klemmbacken 23 gleitend gelagert ist. An jeder Klemmbacke 23 ist ein aus zwei Hebeln 32 bestehendes Hebelsystem 33 angelenkt, dessen anderes Ende um eine zum Schlitten 30 senkrechte Achse 34 drehbar auf diesem befestigt ist. Die Hebel 32 bzw. Hebelsysteme 33 sind jeweils gelenkig mit einem parallel zu den Klemmbacken 23 bzw. zur Fahrleitungslängsrichtung wirkenden Spannantrieb 35 verbunden, der auf der Tragplatte 22 montiert ist und zur Veränderung der Distanz zwischen den Klemmbacken 23 und der Verstelleinrichtung 9 bzw. dem Gelenk 27 dient. Jeder Klemmbacke 23 ist somit ein eigener Spannantrieb 35 zugeordnet. Die Hebelsysteme 33 sind dabei so ausgebildet, daß eine Beaufschlagung der Spannantriebe 35 nicht nur eine Verschiebung des Schlittens 30 mitsamt den Klemmbacken 23 relativ zur Tragplatte 22, sondern gleichzeitig auch eine Bewegung der Klemmbacken 23 zueinander zur Aufbringung von Klemmkräften auf den Fahrdraht 11 bzw. das Tragseil 12 bewirkt. Zur Dosierung dieser Klemmkräfte ist jedem Spannantrieb 35 ein Druckregelventil 36 zugeordnet.

Die Klemmbacken 23 jedes Klemmbackenpaares 24 weisen an den einander zugewandten Seiten jeweils eine Kunststoffeinlage 37 auf, die zur Anlage an den Fahrdraht 11 bzw. das Tragseil 12 der Fahrleitung 2 vorgesehen und deren Kontaktfläche den Konturen des Fahrdrahtes bzw. Tragseiles jeweils angepaßt ist.

Im Arbeitseinsatz wird durch Beaufschlagung der Antriebe 17 und des Drehantriebes 14 die Verstelleinrichtung 9 bzw. der Kranausleger 13 derart verstellt, daß die beiden Klemmbackenpaare 24 der Klemmvorrichtung 10 unmittelbar oberhalb des Fahrdrahtes 11 bzw. unterhalb des Tragseiles 12 zu liegen kommen. Die richtige Lagepositionierung ist dabei mit Hilfe der Drehantriebe 29 des Gelenkes 27 anhand von Kontrolleinrichtungen 51 steuerbar. Der Drehantrieb 14 des Kranauslegers 13 sowie die Antriebe 17 werden blockiert. Anschließend erfolgt eine Beaufschlagung des Verstellantriebes 49, bis der Fahrdraht 11 bzw. das Tragseil 12 zwischen den beiden Klemmbacken 23 jedes Klemmbackenpaares 24 zu liegen kommt. In weiterer Folge werden die Spannantriebe 35 beaufschlagt, wodurch die Klemmbacken 23 an den Fahrdraht 11 bzw. an das Tragseil 12 angepreßt und in weiterer Folge in Richtung zur Verstelleinrichtung 9 bewegt werden. Die Ursache für diese Längsverschiebung der Klemmbackenpaare 24 liegt darin begründet, daß die weit ausladende Verstelleinrichtung 9 aufgrund der hohen Zugkräfte elastisch deformiert wird. Sobald diese elastische Deformation beendet ist, werden die vorgeschriebenen Spannkräfte mit Hilfe der Klemmvorrichtung 10 exakt auf die Fahrleitung 2 aufgebracht. Anschließend kann problemlos die erforderliche Reparatur an Radspannwerken 50 durchgeführt werden. Um während der elastischen Deformation des Kranauslegers 13 eine selbsttätige Ausrichtung der Klemmvorrichtung 10 in Richtung des Fahrdrahtes 11 bzw. des Tragseiles 12 zu erhalten, ist eine blockierungsfreie bzw. schwimmende Schaltung der Drehantriebe 29 zweckmäßig. Der zur Beaufschlagung der Spannantriebe 35 erforderliche und die vorschriftsmäßige Spannkraft erzeugende Druck ist durch die Druckregelventile 36 einstellbar. Anstelle des beschriebenen Kranauslegers 13 ist jede andere Konstruktion einer Vorrichtung zur Höhen- und Seitenverstellung der Klemmvorrichtung 10 in bezug auf den Maschinenrahmen 5 als Verstelleinrichtung 9 einsetzbar.

Fig. 5 zeigt eine alternative Ausführung der in den Fig. 2 bis 4 dargestellten Klemmvorrichtung 10, bei der das jeder Klemmbacke 23 zugeordnete Hebelsystem 33 aus zwei separaten, nach Art eines Parallelogramms angeordneten Hebeln 38 besteht. Diese sind jeweils an der Klemmbacke 23 und dem Schlitten 30 angelenkt und ermöglichen eine Verschwenkung der Klemmbacken 23 in einer zum Fahrdraht 11 bzw. Tragseil 12 parallelen Position. Ein am Schlitten 30 befestigter Klemmantrieb 39 dient zur Anlage der Klemmbacken 23 an den Fahrdraht 11 bzw. das Tragseil 12 zu Einsatzbeginn und zur anfänglichen Aufbringung einer Klemmkraft. Die Spannantriebe 35 greifen hier - zum Unterschied vom obigen Ausführungsbeispiel - direkt am Schlitten 30 an, wobei die spezielle Anordnung der Hebel 38 dazu führt, daß eine Erhöhung der Spannkraft durch die Spannantriebe 35 gleichzeitig eine dazu proportionale Erhöhung der Klemmkräfte der Klemmbacken 23 zueinander bewirkt.

Eine in Fig. 6 und 7 ersichtliche Klemmvorrichtung 40 ist im hier gezeigten Fall zum Festklemmen eines Fahrdrahtes 11 ausgebildet und weist zwei zangenartige Klemmbackenpaare 41 auf, die in Längsrichtung der Fahrleitung 2 voneinander distanziert angeordnet sind und die anhand von zwei - zur beidseitigen Anlage an den Fahrdraht 11 vorgesehenen - Kunststoffprofilen 42 miteinander verbunden sind. Jedes Klemmbackenpaar 41 ist mittels eines eigenen Klemmantriebes 43 zur Aufbringung einer Klemmkraft auf den Fahrdraht 11 beaufschlagbar. Die beiden Klemmbackenpaare 41 sind auf einem Schlitten 44 befestigt, der auf einem Tragrahmen 45 gelagert und relativ zu diesem in einer in Fahrdrahtlängsrichtung verlaufenden Führungsnut 46 verstellbar ist. Der Tragrahmen 45 ist am Ende einer (nicht näher dargestellten) höhen- und seitenverstellbaren Verstelleinrichtung 47 montiert. Zur Längsverstellung des Schlittens 44 in bezug auf den Tragrahmen 45 dient ein Spannantrieb 48, mittels dessen der Fahrdraht 11 bei gleichzeitiger Beaufschlagung der Klemmantriebe 43 gespannt wird.

## Patentansprüche

1. Maschine zur Unterhaltung einer Fahrleitung eines Gleises mit einem auf Schienenfahrwerken (4) abgestützten, durch einen Fahrantrieb (8) verfahrbaren Maschinenrahmen (5), dadurch gekennzeichnet, daß eine verstellbare Klemmbacken (23) zum Festklemmen eines Fahrdrahtes (11) oder Tragseiles (12) der Fahrleitung (2) aufweisende Klemmvorrichtung (10;40) mit einer durch Antriebe (17,14) höhen- und seitenverstellbaren, am Maschinenrahmen (5) befestigten Verstelleinrichtung (9;47) verbunden ist, und daß ein Spannantrieb (35;48) zur Veränderung der Distanz zwischen Klemmbacken (23) und Verstelleinrichtung (9;47) vorgesehen ist.

2. Maschine nach Anspruch 1, dadurch gekennzeichnet, daß die Klemmvorrichtung (10) durch ein allseitig wirksames Gelenk (27) mit der Verstelleinrichtung (9) verbunden ist.

3. Maschine nach Anspruch 2, dadurch gekennzeichnet, daß jeder Drehachse (28) des Gelenkes (27) ein eigener Drehantrieb (29) zugeordnet ist.

4. Maschine nach einem der Ansprüche 1, 2 oder 3, dadurch gekennzeichnet, daß die Verstelleinrichtung (9) als durch einen Drehantrieb (14) um eine vertikale Achse (15) verdrehbarer, durch Antriebe (17) höhenverstellbarer Kranausleger (13) ausgebildet ist, wobei die Klemmvorrichtung (10) am freien, teleskopisch verlängerbare Kranarme (16) aufweisenden Ende des Kranauslegers (13) befestigt ist.

5. Maschine nach einem der Ansprüche 1 bis 4, dadurch gekennzeichnet, daß der Spannantrieb (35) zur Übertragung der Klemmkräfte über ein Hebelsystem (33) mit den Klemmbacken (23) verbunden ist.

6. Maschine nach einem der Ansprüche 1 bis 5, dadurch gekennzeichnet, daß dem Spannantrieb (35) ein Druckregelventil (36) zugeordnet ist.

7. Maschine nach einem der Ansprüche 1 bis 6, dadurch gekennzeichnet, daß jeder Klemmbacke (23) eine zur Anlage an den Fahrdraht (11) bzw. das Tragseil (12) der Fahrleitung (2) vorgesehene Kunststoffeinlage (37) mit einer den Konturen des Fahrdrahtes bzw. des Tragseiles angepaßten Kontaktfläche zugeordnet ist.

8. Maschine nach einem der Ansprüche 1 bis 7, dadurch gekennzeichnet, daß die Klemmvorrichtung (10) aus zwei in vertikaler Richtung übereinander angeordneten Klemmbackenpaaren (24) gebildet ist, die durch einen Verstellantrieb (49) unterschiedlich zueinander distanzierbar sind.

9. Maschine nach Anspruch 8, dadurch gekennzeichnet, daß jeder Klemmbacke (23) jedes Klemmbackenpaares (24) ein eigener Spannantrieb (35) mit einem eigenen Druckregelventil (36) zugeordnet ist.

10. Maschine nach einem der Ansprüche 1 bis 9, dadurch gekennzeichnet, daß der mit der Klemmvorrichtung (10) verbundene Kranausleger (13) an einem Stirnende des Maschinenrahmens (5) angeordnet ist, und daß am gegenüberliegenden Stirnende des Maschinenrahmens ein weiterer, durch Antriebe (19) höhen- und seitenverstellbarer Kranausleger (18) mit einer Arbeitsbühne (20) vorgesehen ist.

## Claims

1. A machine for maintenance of an overhead line of a track, comprising a machine frame (5) supported on on-track undercarriages (4) and mobile by means of a motive drive (8), characterized in that a clamping apparatus (10;40), having adjustable clamping jaws (23) for clamping a contact wire (11) or carrying cable (12) of the overhead line (2), is connected to an adjusting device (9;47) which is vertically and laterally adjustable by means of drives (17,14) and fastened to the machine frame (5), and that a tensioning drive (35;48) is provided for changing the distance between the clamping jaws (23) and the adjusting device (9;47).

2. A machine according to claim 1, characterized in that the clamping apparatus (10) is connected to the adjusting device (9) by means of a universal joint (27).

3. A machine according to claim 2, characterized in that a separate rotary drive (29) is associated with each axis of rotation (28) of the joint (27).

4. A machine according to one of claims 1, 2 or 3, characterized in that the adjusting device (9) is designed as a crane jib (13) which is vertically adjustable by means of drives (17) and rotatable about a vertical axis (15) by means of a rotary drive (14), the clamping apparatus (10) being fastened to the free end, having telescopically elongatable crane arms (16), of the crane jib (13).

5. A machine according to one of claims 1 to 4, characterized in that, for transmitting the clamping forces, the tensioning drive (35) is connected to the clamping jaws (23) by means of a lever system (33).

6. A machine according to one of claims 1 to 5, characterized in that a pressure regulator valve (36) is associated with the tensioning drive (35).

7. A machine according to one of claims 1 to 6, characterized in that associated with each clamping jaw (23) is a synthetic liner (37), provided for application to the contact wire (11) or the carrying cable (12) of the overhead line (2) and having a contact surface adapted to the contours of the contact wire or the carrying cable, respectively.

8. A machine according to one of claims 1 to 7, characterized in that the clamping apparatus (10) is formed by two pairs (24) of clamping jaws, arranged one above the other in the vertical direction, which may be variably distanced from one another by means of an adjusting drive (49).

9. A machine according to claim 8, characterized in that associated with each clamping jaw (23) of each pair (24) of clamping jaws is a separate tensioning drive (35) having a separate pressure regulator valve (36).

10. A machine according to one of claims 1 to 9, characterized in that the crane jib (13) connected to the clamping apparatus (10) is arranged at a front end of the machine frame (5), and that a further crane jib (18), vertically and laterally adjustable by means of drives (19) and having a work platform (20), is provided at the opposite front end of the machine frame.

## Revendications

1. Machine pour l'entretien d'une caténaire d'une voie ferrée, avec un châssis de machine (5) prenant appui sur des trains de roulement sur rails (4), déplaçable par un dispositif de locomotion (8), caractérisée en ce qu'un dispositif de serrage (10; 40) présentant des mâchoires de serrage réglables (23) pour le serrage d'un fil de contact (11) ou d'un câble porteur (12) de la caténaire (2) est relié à un dispositif de réglage (9; 47), réglable en hauteur et vers les côtés par des commandes (17, 14), fixé au châssis de machine (5), et en ce qu'il est prévu une commande de tension (35; 48) pour modifier la distance entre les mâchoires de serrage (23) et le dispositif de réglage (9; 47).

2. Machine selon la revendication 1, caractérisée en ce que le dispositif de serrage (10) est relié par une articulation (27) active de tout côté au dispositif de réglage (9).

3. Machine selon la revendication 2, caractérisée en ce qu'il est associé à chaque axe de rotation (28) de l'articulation (27) une commande de rotation propre (29).

4. Machine selon l'une des revendications 1, 2 ou 3, caractérisée en ce que le dispositif de réglage (9) est réalisé sous forme de flèche de grue (13) pouvant tourner par une commande de rotation (14) autour d'un axe vertical (15) et réglable en hauteur par des commandes (17), où le dispositif de serrage (10) est fixé à l'extrémité libre de la flèche de grue (13) présentant des bras de grue télescopiques (16).

5. Machine selon l'une des revendications 1 à 4, caractérisée en ce que la commande de tension (35) pour transférer les forces de serrage est reliée par un système à leviers (33) aux mâchoires de serrage (23).

6. Machine selon l'une des revendications 1 à 5, caractérisée en ce qu'il est associé à la commande de tension (35) une vanne de réglage de pression (36).

7. Machine selon l'une des revendications 1 à 6, caractérisée en ce qu'il est associé à chaque mâchoire de serrage (23) un insert en matière synthétique (37) prévu pour l'application au fil de contact (11), respectivement au câble porteur (12) de la caténaire (2), avec une surface de contact adaptée aux contours du fil de contact, respectivement du câble porteur.

8. Machine selon l'une des revendications 1 à 7, caractérisée en ce que le dispositif de serrage (10) est constitué de deux paires de mâchoires de serrage (24) disposées l'une au-dessus de l'autre dans la direction verticale qui peuvent être espacées différemment l'une de l'autre par une commande de réglage (49).

9. Machine selon la revendication 8, caractérisée en ce qu'il est associé à chaque mâchoire de serrage (23) de chaque paire de mâchoires de serrage (24) une commande de tension propre (35) avec une vanne de réglage de pression propre (36).

10. Machine selon l'une des revendications 1 à 9, caractérisée en ce que la flèche de grue (13) reliée au dispositif de serrage (10) est disposée à une extrémité frontale du châssis de machine (5), et en ce qu'il est prévu à l'extrémité frontale opposée du châssis de machine une flèche de grue supplémentaire (18) réglable en hauteur et vers les côtés par des commandes (19), avec une plate-forme de travail (20).
